# EUROPEAN PATENT APPLICATION

(11) **EP 4 757 481 A1**
(43) Date of publication of application: **10.06.2026**
(21) Application number: 24847929.7
(22) Date of filing: 04.07.2024
(51) Int. Cl.: H04W 72/563

(54) **LOGICAL CHANNEL PRIORITY DETERMINATION METHOD AND APPARATUS**

(30) Priority: 28.07.2023 CN 202310947478
(71) Applicant: Datang Mobile Communications Equipment Co., Ltd., Beijing 100085 (CN)
(72) Inventor: ZHAO, Yali, Beijing 100085 (CN); CHEN, Li, Beijing 100085 (CN)
(74) Representative: Ipsilon
(86) International application number: PCT/CN2024/103624
(87) International publication number: WO 2025/025969

(57) **Abstract**

Embodiments of the present disclosure provide a logical channel priority determination method and apparatus. The method is applied to a communication equipment, and comprises: determining that multiple logical channels belonging to one or more terminals and having an association use the same logical channel priority, in a communication equipment comprises a first network device, and the first network device comprises a network device providing a service to at least one terminal among the one or more terminals; or the communication equipment comprises at least one terminal among the one or more terminals; and the logical channels include a logical channel of a Uu interface or a logical channel of a direct communication interface.

## Description

### CROSS-REFERENCE TO RELATED APPLICATION

The present application claims priority to Chinese Patent Application No. 202310947478.4, filed on July 28, 2023, entitled "Logical Channel Priority Determination Method and Apparatus", which is hereby incorporated by reference in its entirety.

### FIELD

The present application relates to the field of communications, and in particular to a method and an apparatus for determining logical channel priority.

### BACKGROUND

Transmissions on a dedicated radio bearer (DRB) are based on scheduling of a media access control (MAC) layer. In the related art, an uplink resource allocation of a base station is for a single terminal. In the related art, to ensure fairness among different uplink logical channels of a same terminal and to avoid starvation of some services, a logical channel prioritization (LCP) mechanism based on logical channel priority and prioritised bit rate (PBR) is adopted.

The LCP mechanism based on logical channel priority and PBR is as follows: after the terminal obtains an uplink (UL) grant, in a descending order of logical channel priorities, a first round of resource allocation is carried out for each logical channel with data transmission requirements according to PBR. In case that there are still remaining resources after the first round of resource allocation, resource allocation is performed for each logical channel in a descending order of the priorities of the current logical channels with data transmission requirements.

In the LCP procedure described above, a data transmission priority of each logical channel is determined separately. Therefore, it is impossible to guarantee synchronization of multiple quality of service (QoS) flows corresponding to a same service during an air interface transmission, such as a multi-modal eXtended reality (XR) service, which may affect the user experience.

### SUMMARY

Embodiments of the present application provide a method and an apparatus for determining logical channel priority to enable different QoS flows corresponding to a same service to be transmitted synchronously over an air interface, thereby meeting synchronous transmission requirements of a multi-modal service.

According to an embodiment of the present application, a method for determining logical channel priority performed by a communication equipment is provided. The method includes:
determining that a plurality of logical channels with an association belonging to one or more terminals use a same logical channel priority; and
where the communication equipment includes a first network device, and the first network device includes a network device that provides services to at least one of the one or more terminals; or, the communication equipment includes at least one of the one or more terminals; where the logical channel includes a logical channel of a Uu interface or a logical channel of a sidelink interface.

According to the method for determining logical channel priority of an embodiment of the present application, in case that the communication equipment includes the first network device, the method further includes:
receiving first assistance information sent from a second network device; and
determining the association among the plurality of logical channels based on the first assistance information;
where the second network devices include a network device that provides services to at least one of the one or more terminals, and the second network device is different from the first network device.

According to the method for determining logical channel priority of an embodiment of the present application, the first assistance information includes at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

According to the method for determining logical channel priority of an embodiment of the present application, in case that the communication equipment includes the first network device, the method further includes:
sending a first message to a second network device, where the first message includes at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity;
where the first identity includes at least one of the following: a terminal identity or a logical channel identity.

According to the method for determining logical channel priority of an embodiment of the present application, in case that the communication equipment includes the first network device, the method further includes:
sending first configuration information to the one or more terminals, where the first configuration information is used for configuring a same logical channel priority for the plurality of logical channels with the association.

According to the method for determining logical channel priority of an embodiment of the present application, in case that the communication equipment includes at least one of the one or more terminals, the method further includes:
determining the association among the plurality of logical channels based on second configuration information sent from the network device that provides services to the at least one terminal.

According to the method for determining logical channel priority of an embodiment of the present application, the second configuration information includes at least one of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

According to the method for determining logical channel priority of an embodiment of the present application, in case that the communication equipment includes at least one of the one or more terminals, determining that the plurality of logical channels with the association belonging to the one or more terminals use the same logical channel priority includes:
determining an initial logical channel priority corresponding to each of the plurality of logical channels based on logical channel priority configuration information sent from the network device that provides services to the terminals; and
determining that the plurality of logical channels with the association belonging to the one or more terminals use the same logical channel priority based on the initial logical channel priority corresponding to each of the plurality of logical channels.

According to the method for determining logical channel priority of an embodiment of the present application, determining that the plurality of logical channels with the association belonging to the one or more terminals use the same logical channel priority includes any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

According to the method for determining logical channel priority of an embodiment of the present application, a same logical channel priority corresponding to the plurality of logical channels with the association at the Uu interface is used for a logical channel prioritization (LCP) procedure.

According to the method for determining logical channel priority of an embodiment of the present application, a same logical channel priority corresponding to the plurality of logical channels with the association at the direct communication interface is used for at least one of the following:
a logical channel prioritization (LCP) procedure;
determining a priority indicated by sidelink control information (SCI); or
determining whether to prioritize an uplink (UL) transmission or a sidelink (SL) transmission in case of a conflict between the UL transmission and the SL transmission.

According to an embodiment of the present application, a first network device is provided. The first network device includes: a memory, a transceiver, and a processor;
where the memory is used for storing a computer program; the transceiver is used for receiving and sending data under control of the processor; and the processor is used for reading the computer program in the memory and implementing the steps of any of the methods for determining logical channel priority described above.

According to an embodiment of the present application, a terminal is provided. The terminal includes: a memory, a transceiver, and a processor;
where the memory is used for storing a computer program; the transceiver is used for receiving and sending data under control of the processor; and the processor is used for reading the computer program in the memory and implementing the steps of any of the methods for determining logical channel priority described above.

According to an embodiment of the present application, an apparatus for determining logical channel priority is provided, which is applied to a communication equipment. The apparatus includes:
a priority determining module, used for determining that multiple logical channels with an association belonging to one or more terminals use a same logical channel priority; and
where the communication equipment includes a first network device, and the first network device includes a network device that provides services to at least one of the one or more terminals; or, the communication equipment includes at least one of the one or more terminals; where the logical channel includes a logical channel of a Uu interface or a logical channel of a sidelink interface.

According to the apparatus for determining logical channel priority of an embodiment of the present application, in case that the communication equipment includes the first network device, the apparatus further includes:
an assistance information receiving module, used for receiving first assistance information sent from a second network device; and
a first association determining module, used for determining the association among the plurality of logical channels based on the first assistance information;
where the second network devices include a network device that provides services to at least one of the one or more terminals, and the second network device is different from the first network device.

According to the apparatus for determining logical channel priority of an embodiment of the present application, the first assistance information includes at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

According to the apparatus for determining logical channel priority of an embodiment of the present application, in case that the communication equipment includes the first network device, the apparatus further includes:
a first message sending module, used for sending a first message to a second network device, where the first message includes at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity.

According to the apparatus for determining logical channel priority of an embodiment of the present application, in case that the communication equipment includes the first network device, the apparatus further includes:
a first configuration information sending module, used for sending first configuration information to the one or more terminals, where the first configuration information is used for configuring a same logical channel priority for the plurality of logical channels with the association.

According to the apparatus for determining logical channel priority of an embodiment of the present application, in case that the communication equipment includes at least one of the one or more terminals, the apparatus further includes:
a second association determining module, used for determining the association among the plurality of logical channels based on second configuration information sent from the network device that provides services to the at least one terminal.

According to the apparatus for determining logical channel priority of an embodiment of the present application, the second configuration information includes at least one of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

According to the apparatus for determining logical channel priority of an embodiment of the present application, in case that the communication equipment includes at least one of the one or more terminals, the priority determining module is used for:
determining an initial logical channel priority corresponding to each of the plurality of logical channels based on logical channel priority configuration information sent from the network device that provides services to the terminals; and
determining that the plurality of logical channels with the association belonging to the one or more terminals use the same logical channel priority based on the initial logical channel priority corresponding to each of the plurality of logical channels.

According to the apparatus for determining logical channel priority of an embodiment of the present application, the priority determining module is used for at least one of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

According to the apparatus for determining logical channel priority of an embodiment of the present application, a same logical channel priority corresponding to the plurality of logical channels with the association at the Uu interface is used for a logical channel prioritization (LCP) procedure.

According to the apparatus for determining logical channel priority of an embodiment of the present application, a same logical channel priority corresponding to the plurality of logical channels with the association at the sideline interface is used for at least one of the following:
a logical channel prioritization (LCP) procedure;
determining a priority indicated by sidelink control information (SCI); or
determining whether to prioritize an uplink (UL) transmission or a sidelink (SL) transmission in case of a conflict between the UL transmission and the SL transmission.

Embodiments of the present application provide a method and apparatus for determining logical channel priority, in which that a plurality of logical channels with an association belonging to one or more terminals have a same logical channel priority is determined, to enable different QoS flows corresponding to a same service to be transmitted synchronously over an air interface, thereby meeting synchronous transmission requirements of a multi-modal service.

### BRIEF DESCRIPTION OF THE DRAWINGS

In order to clearly illustrate the solutions according to the embodiments of the present application or the related art, the accompanying drawings used in the description of the embodiments or the related art are briefly introduced below. It should be noted that the drawings in the following description are only some embodiments of the present application. For those of ordinary skill in the art, other drawings may be obtained according to these drawings without creative efforts.
FIG. 1 is a schematic diagram of a user plane protocol stack in the related art;
FIG. 2 is a schematic structural diagram of an eXtended reality (XR) service data frame according to an embodiment of the present application;
FIG. 3 is a first schematic flowchart of a method for determining logical channel priority according to an embodiment of the present application;
FIG. 4 is a second schematic flowchart of a method for determining logical channel priority according to an embodiment of the present application;
FIG. 5 is a third schematic flowchart of a method for determining logical channel priority according to an embodiment of the present application;
FIG. 6 is a schematic structural diagram of a first network device according to an embodiment of the present application;
FIG. 7 is a schematic structural diagram of a terminal according to an embodiment of the present application; and
FIG. 8 is a schematic structural diagram of an apparatus for determining logical channel priority according to an embodiment of the present application.

### DETAILED DESCRIPTION

The term "and/or" in the embodiments of the present application describes associations of the associated objects, indicating that there may be three relationships. For example, A and/or B may represent three situations: only A, A and B together, and only B. The character "/" generally represents that the two objects on two sides have a relationship of "or".

The terms "multiple" and "a plurality of" in the embodiments of the present application refer to two or more, and other quantifiers are similar to them.

The solutions according to the present application are clearly and completely described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

First, the following contents are introduced.

### (1) Basic procedure of air interface data processing

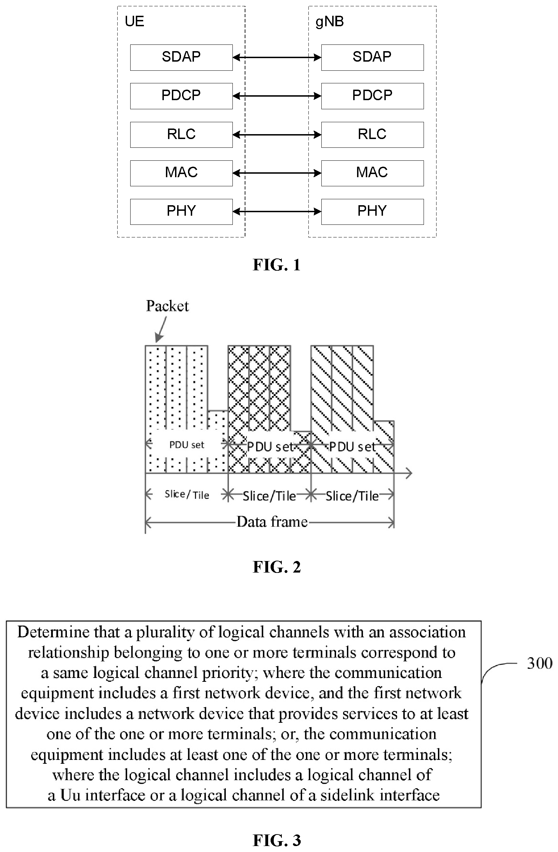

FIG. 1 is a schematic diagram of a user plane protocol stack in the related art. As shown in FIG. 1, a fifth generation (5G) user plane air interface protocol layer includes a service data adaptation protocol (SDAP) layer, a packet data convergence protocol (PDCP) layer, a radio link control (RLC) layer, a media access control (MAC) layer, and a physical layer.

After a quality of service (QoS) flow arrives at an SDAP, the SDAP performs a mapping from the QoS Flow to a dedicated radio bearer (DRB), which then forms an SDAP protocol data unit (PDU). The SDAP PDU is the same as a PDCP service data unit (SDU). After performing header compression and encryption on the PDCP SDU, the PDCP layer delivers it to the RLC layer. The RLC layer then encapsulates an RLC PDU according to the MAC layer scheduling information and delivers it to the MAC layer. The MAC layer encapsulates the received RLC PDU into an MAC PDU and then delivers it to the physical layer for transmission.

The principle for the SDAP to perform the mapping from the QoS flow to the DRB is as follows: since QoS attributes of packets in a QoS flow are basically the same, a QoS flow may only be mapped to one DRB.

### (2) XR basic concepts

The communication system has introduced eXtended reality (XR) services, which are divided into the following categories:
augmented reality (AR): seamlessly integrates a real world and a virtual world, half real and half false;
virtual reality (VR): uses devices to simulate and create a virtual world, entirely false;
mixed reality (MR): simultaneously contains both real physical entities and virtual information.

In the development of communication systems, extended reality (XR) services have been introduced. XR services may need a plurality of user devices, such as a 3-dimensional (3D) glass, a remote controller, etc.

There are two basic ways to connect an XR service to wireless networks. Way 1: all user equipment is connected to a single user equipment (UE, such as a terminal), and the XR service accesses the wireless network through the terminal. In this way, coordinated transmission of different flows in an XR service by the same terminal is achieved, which is also called intra-UE multi-modal. Way 2: different user equipment accesses the wireless network as different terminals. In this way, coordinated transmission of different flows in an XR service by a plurality of terminals is achieved, which is also called inter-UE multi-modal.

FIG. 2 is a schematic structural diagram of an XR service data frame according to an embodiment of the present application. As shown in FIG. 2, a same data frame may be divided into a plurality of packet data units (PDUs). A definition of a PDU set is as follows: one or more PDUs corresponding to a same information unit constitute a PDU set.

An XR service supports multi-modality. Under multi-modality, a plurality of QoS flows of a service are transmitted synchronously over the air interface (also known as coordinated transmission).

In the related art, a data transmission priority of each logical channel in a logical channel prioritization (LCP) procedure is determined separately. There is no association between transmissions of different logical channels (LCHs) and no synchronous transmission is performed.

Embodiments of the present application provide a method and an apparatus for determining logical channel priority to enable different QoS flows corresponding to a same service to be transmitted synchronously over an air interface, thereby meeting synchronous transmission requirements of a multi-modal service.

It should be noted that the method and the apparatus according to the embodiments of the present application are based on the same conception. Since the principles of the method and the apparatus to solve the problems are similar, as for the implementation of the apparatus and method, reference may be made to each other, and the same part will not be repeated.

The technical solutions provided by the embodiments of the present application may be applied to a variety of systems, especially 5G systems. For example, an applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and the like. Each of these various systems includes a terminal device and a network device. The system may also include a core network, such as an evolved packet system (EPS), a 5G System (5GS), and the like.

FIG. 3 is a first schematic flowchart of a method for determining logical channel priority according to an embodiment of the present application. As shown in FIG. 3, the method for determining logical channel priority is applied to a communication equipment, that is, the execution body of the method for determining logical channel priority is a communication equipment, such as a terminal or a first network device. The method for determining logical channel priority includes the following steps.

Step 300, determine that a plurality of logical channels with an association belonging to one or more terminals use a same logical channel priority;
where the communication equipment includes a first network device, and the first network device includes a network device that provides services to at least one of the one or more terminals; or, the communication equipment includes at least one of the one or more terminals; where the logical channel includes a logical channel of a Uu interface or a logical channel of a sidelink interface.

In an embodiment, a plurality of logical channels corresponds to a same logical channel priority, which may indicate that the plurality of logical channels corresponds to a same logical channel priority on a Uu interface or a sidelink interface.

For example, in order to coordinate the transmission between different LCHs and meet the synchronization requirements of a plurality of QoS flows of user terminals during air interface transmission, the association between different logical channels of one or more terminals may be determined, and the logical channels with the association may be determined to use the same logical channel priority on the Uu interface or sidelink interface.

In embodiments of the present application, the same logical channel priority corresponding to a plurality of logical channels with an association may be determined by at least one terminal among the one or more terminals to which the plurality of logical channels with an association belong, or determined by a first network device that provides services to any one of the one or more terminals.

In an embodiment, the first network device may be a base station, a central unit (CU), or a distributed unit (DU), etc.

In an embodiment, in case that the same logical channel priority corresponding to a plurality of logical channels with an association is determined by a first network device that provides services to any one of the one or more terminals, the specific method for determining the same priority may depend on the implementation of the first network device.

For services with synchronization requirements, such as XR services, the present application proposes a method for determining logical channel priority. In case that one or more terminals transmit the same multi-modal service, the method may ensure equality of acquiring air interface resources, and better guarantee synchronous transmission of a plurality of flows on the air interface, which may prevent the service from being starved due to a low priority of one logical channel, and prevent affecting the overall service performance.

Embodiments of the present application provide a method for determining logical channel priority, in which that a plurality of logical channels with an association belonging to one or more terminals have a same logical channel priority is determined, to enable different QoS flows corresponding to a same service to be transmitted synchronously over an air interface, thereby meeting synchronous transmission requirements of a multi-modal service.

In an embodiment, in case that the communication equipment includes the first network device, the method further includes:
receiving first assistance information sent from a second network device; and
determining the association among the plurality of logical channels based on the first assistance information;
where the second network device includes a network device that provides services to at least one of the one or more terminals, and the second network device is different from the first network device.

For example, in case that the plurality of logical channels with an association are served by different network devices (i.e., the first network device and the second network device), the second network device needs to send first assistance information to the first network device through the interface between network devices (such as the Xn interface) so that the first network device may know the association between the plurality of logical channels.

In an embodiment, the second network device may be a base station or a CU, etc.

In an embodiment, the first assistance information includes one or more of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

In an embodiment, the first identity includes a terminal identity and a logical channel identity. The terminal identity may be a unique identity corresponding to each terminal, such as a short-temporary mobile subscriber identity (S-TMSI) or a cell-radio network temporary identity (C-RNTI). The logical channel may be identified by a logical channel identity (LCID). Logical channels under different terminals may use the same or different LCIDs.

In an embodiment, the first identity includes the terminal identity and/or logical channel identity. The terminal identity may be a unique identity corresponding to each terminal, such as a short-temporary mobile subscriber identity (S-TMSI) or a cell-radio network temporary identity (C-RNTI). The logical channel identity uniquely identifies a logical channel within a terminal. The logical channel identities used by logical channels corresponding to different terminals may be the same or different.

For example, the second network device may directly inform the first network device of the association among the plurality of logical channels through the first assistance information, or indirectly inform the first network device of the association among the plurality of logical channels through the first assistance information.

In an embodiment, the first assistance information may include the association among the plurality of logical channels. That is, the first assistance information may include at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device.

In an embodiment, the first assistance information may include a QoS flow identity associated with a plurality of logical channels, so that the first network device may determine that there is an association among the plurality of logical channels in case that the QoS flow identity associated with the plurality of logical channels are the same. That is, the first assistance information may include at least one of the following:
a QoS flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device.

After the first network device knows the QoS flow identity associated with the plurality of logical channels through the first assistance information, in case of determining that all or some of the logical channels are associated with the same QoS flow identity, then the first network device determines that the logical channels associated with the same QoS flow identity have an association.

In an embodiment, the first assistance information may include a service identity associated with a plurality of logical channels, so that the first network device may determine that there is an association among the plurality of logical channels in case that the service identity associated with the plurality of logical channels are the same. That is, the first assistance information may include at least one of the following:
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device; or
a mapping relationship between a service identity and a first identity belonging to the second network device.

After the first network device knows the service identity associated with the plurality of logical channels through the first assistance information, in case of determining that all or some of the logical channels are associated with the same service identity, then the first network device determines that the logical channels associated with the same service identity have an association.

In an embodiment, the first assistance information may include one or more of the following: an association among the plurality of logical channels, the service identity associated with the plurality of logical channels, or the QoS flow identity associated with the plurality of logical channels.

For example, the first assistance information may include the association among some logical channels of the plurality of logical channels, and may also include a QoS flow identity of at least one of a part of the plurality of logical channels and a QoS flow identity of another part of the plurality of logical channels, so that in case that the first network device determines that the QoS flow identity of another part of the plurality of the logical channels is the same as the QoS flow identity of at least one of a part of the plurality of logical channels, that is, in case that there is an association between another part of the plurality of the logical channels and at least one of a part of the plurality of logical channels, it may be determined that there is an association between the plurality of logical channels.

That is, the first assistance information may include one or more of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

In an embodiment, content of the first assistance information includes one or more of the following:
a logical channel identity served by the second network device and associated with a logical channel under the first network device; in an embodiment, content of the first assistance information may also include a terminal identity to which the logical channel belongs;
a mapping relationship between a QoS flow identity and a logical channel identity; in an embodiment, content of the first assistance information may also include a terminal identity to which the logical channel belongs.

In an embodiment, in case that the communication equipment includes the first network device, the method further includes:
sending a first message to a second network device, where the first message includes at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity;
where the first identity includes at least one of the following: a terminal identity or a logical channel identity.

In an embodiment, the first identity includes a terminal identity and a logical channel identity. The terminal identity may be a unique identity corresponding to each terminal, such as a short-temporary mobile subscriber identity (S-TMSI) or a cell-radio network temporary identity (C-RNTI). The logical channel may be identified by a logical channel identity (LCID). Logical channels under different terminals may use the same or different LCIDs.

In an embodiment, the first identity includes the terminal identity and/or logical channel identity. The terminal identity may be a unique identity corresponding to each terminal, such as a short-temporary mobile subscriber identity (S-TMSI) or a cell-radio network temporary identity (C-RNTI). The logical channel identity uniquely identifies a logical channel within a terminal. The logical channel identities used by logical channels corresponding to different terminals may be the same or different.

For example, after the first network device determines that the logical channels with an association use the same logical channel priority on the Uu interface or the sidelink interface, the first network device may send a first message to the second network device through the interface between network devices (such as the Xn interface) to inform that the logical channels with an association use the same logical channel priority on the Uu interface or the sidelink interface.

In an embodiment, the first network device may inform the second network device of the priority of one or more of the plurality of logical channels through the first message. Since the plurality of logical channels with an association use the same priority, the second network device may know that the logical channels with the association use the same logical channel priority on the Uu interface or the sidelink interface.

The first assistance information may include one or more of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity;
where the first identity includes at least one of the following: a terminal identity or a logical channel identity.

In an embodiment, the first message at least includes the same logical channel priority used by the logical channels with an association on the Uu interface or the sidelink interface, and may also include one or more of the following:
a common service identity (such as Common ID or Service ID);
a logical channel identity; or
a terminal identity to which the logical channel belongs.

In an embodiment, after the second network device knows that logical channels with an association use the same logical channel priority on the Uu interface or the sidelink interface, the second network device may send configuration information to the terminals it serves to configure the logical channel priority.

In an embodiment, in case that the communication equipment includes the first network device, the method further includes:
sending first configuration information to the one or more terminals, where the first configuration information is used for configuring a same logical channel priority for the plurality of logical channels with the association.

For example, in case that it is determined by the first network device that the logical channels with an association use the same logical channel priority on the Uu interface or the sidelink interface, the first network device and/or the second network device also need to send first configuration information to the terminal. Logical channels with an association are configured with the same logical channel priority in the first configuration information.

According to the method for determining logical channel priority of an embodiment of the present application, in case that the communication equipment includes at least one of the one or more terminals, the method further includes:
determining the association among the plurality of logical channels based on second configuration information sent from the network device that provides services to the at least one terminal.

For example, in case that it is determined by at least one terminal of one or more terminals that the logical channels with an association use the same logical channel priority on the Uu interface or the sidelink interface, for a terminal, the method for determining an association among the different logical channels of one or more of terminals include, but are not limited to: network device configuration and/or terminal determination.

For example, in case that it is determined by at least one terminal of one or more terminals that the logical channels with an association use the same logical channel priority on the Uu interface or the sidelink interface, for an terminal, the method for determining the same logical channel priority corresponding to the plurality of logical channels of one or more terminals with an association include, but are not limited to: configuration by the network device and/or determination by the terminal.

In an embodiment, the second configuration information includes at least one of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

For example, for a terminal, determination of the association between different logical channels of one or more terminals may be based on the second configuration information sent from the network device. The second configuration information sent from the network device include, but are not limited to one or more of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

In an embodiment, in case that the second configuration information includes service identities configured for each bearer and/or logical channel, and some or all of the service identities configured for each bearers and/or logical channels are the same, the terminal may determine that the bearers and/or logical channels with the same service identity have an association.

In an embodiment, in case that the second configuration information includes one or more of the following: an identity of a bearer or logical channel having an association with any bearer and/or logical channel among the plurality of logical channels, a terminal identity of a terminal corresponding to a bearer or logical channel having an association with any bearer and/or logical channel among the plurality of logical channels, or, a network device identity of a network device that provides services to a terminal, the terminal corresponding to a bearer or logical channel having an association with any bearer and/or logical channel among the plurality of logical channels, the terminal may directly determine that the bearers and/or logical channels have an association.

In an embodiment, the second configuration information includes, but are not limited to one or more of the following:
a common service identity (such as Common ID or Service ID) configured for each bearer and/or logical channel;
an identity of other bearers or logical channels having an association with the bearer or logical channel; in case that other bearer or logical channels belong to other terminals, the second configuration information also needs to carry terminal identity information and/or the identity information of the network device to which the terminal belongs.

In an embodiment, in case that the communication equipment includes at least one of the one or more terminals, determining that the plurality of logical channels with the association belonging to the one or more terminals use the same logical channel priority includes:
determining an initial logical channel priority corresponding to each of the plurality of logical channels based on logical channel priority configuration information sent from the network device that provides services to the terminals; and
determining that the plurality of logical channels with the association belonging to the one or more terminals use the same logical channel priority based on the initial logical channel priority corresponding to each of the plurality of logical channels.

For example, in case that a terminal determines that the plurality of logical channels with the association belonging to one or more terminals use the same logical channel priority, the logical channel priority configuration information sent from the network device providing services to the terminals may be first obtained. The logical channel priority configuration information includes the initial logical channel priorities respectively corresponding to the plurality of logical channels, i.e., the configured logical channel priorities. However, in order to ensure that logical channels with an association use the same logical channel priority on the Uu interface or the sidelink interface, the terminal also needs to adjust the initial logical channel priority of each of the plurality of logical channels so that the plurality of logical channels with an association belonging to one or more terminals use the same logical channel priority.

In an embodiment, determining that the plurality of logical channels with the association belonging to the one or more terminals use the same logical channel priority includes any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

In an embodiment, in case that the terminal determines that the plurality of logical channels with the association belonging to one or more terminals use a same logical channel priority based on the initial logical channel priority corresponding to each of the plurality of logical channels, the terminal may perform one or more of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

In an embodiment, in case that the first network device determines that a plurality of logical channels with an association belonging to one or more terminals use a same logical channel priority, the first network device may perform one or more of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

In an embodiment, in case that the terminal determines that a plurality of logical channels with an association belonging to one or more terminals use a same logical channel priority, the specific implementation may be one of the following:
receiving, by the terminal, priority configuration information for logical channels from the network device, and selecting the initial logical channel priority of the logical channel with the highest priority among the logical channels with an association as the logical channel priority used by each logical channel in the logical channel group with an association on the Uu interface and/or the sidelink interface;
receiving, by the terminal, priority configuration information for logical channels from the network device, and selecting the initial logical channel priority of the logical channel with the lowest priority among the logical channels with an association as the logical channel priority used by each logical channel in the logical channel group with an association on the Uu interface and/or the sidelink interface; or
receiving, by the terminal, priority configuration information for logical channels from the network device, and weighting and averaging the initial logical channel priority corresponding to each logical channel, the weighted average value being used as the logical channel priority for each logical channel in the logical channel group with an association in the Uu interface and/or the sidelink interface.

In an embodiment, a same logical channel priority corresponding to the plurality of logical channels with the association at the Uu interface is used for a logical channel prioritization (LCP) procedure.

In an embodiment, a same logical channel priority corresponding to the plurality of logical channels with the association at the sideline interface is used for at least one of the following:
a logical channel prioritization (LCP) procedure;
determining a priority indicated by sidelink control information (SCI); or
determining whether to prioritize an uplink (UL) transmission or a sidelink (SL) transmission in case of a conflict between the UL transmission and the SL transmission.

For example, the "same logical channel priority" may be used in the Uu interface to determine the logical channel prioritization (LCP) procedure, and in the sidelink interface the "same logical channel priority" may be used for one or more of the following: determining the LCP procedure, determining the priority incldued in the sidelink control information (SCI), and determining whether to prioritize UL transmission or SL transmission in case that there is a UL/SL transmission conflict.

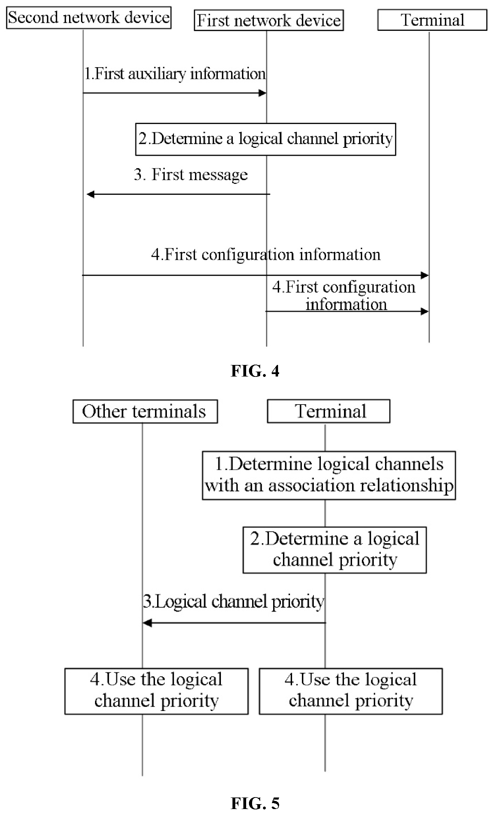

In an embodiment, take the first network device determining the same priority as an example. FIG. 4 is a second schematic flowchart of a method for determining logical channel priority according to an embodiment of the present application. As shown in FIG. 4, the method includes the following steps.

Step 1: send, by the second network device, the first assistance information to the first network device.

In an embodiment, step 1 may be performed only in case that the plurality of logical channels with an association are served by different network devices.

In an embodiment, in a dual connectivity (DC) scenario, one part of the logical channels with an association are the logical channels corresponding to the master node (MN) terminated bearer, and the other part are the logical channels corresponding to the secondary node (SN) terminated bearer.

For example, the second network device sends the first assistance information to the first network device through an interface between network devices (such as the Xn interface). The first assistance information includes at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

For example, content of the first assistance information includes one or more of the following:
a logical channel identity served by the second network device and is associated with the logical channel under the first network device, where the content of the first assistance information may also include the terminal identifier to which the logical channel belongs; or
a mapping relationship between a QoS flow identity and a logical channel identity, where content of the first assistance information may also include a terminal identity to which the logical channel belongs.

For example, the content of the first assistance information may come from the second network device or a distributed unit (DU) corresponding to the second network device. The content of the first assistance information is used to assist the first network device in determining the logical channels with an association of the plurality of terminals served by different network devices.

In an embodiment, the first network device may also determine a group of logical channels with an association at the Uu interface based on assistance information obtained from the core network or assistance information reported by the terminal.

For example, content of the assistance information includes one or more of the following:
common service identity (such as Common ID or Service ID) information; or
a relationship between quality of service (QoS) flows, where in case that the QoS flows belong to different terminals, the content of the assistance information further needs to include the terminal identity and/or the network device identity to which the different terminals belong.

In an embodiment, the first network device determines a group of logical channels with an association based on the assistance information, a mapping relationship between the QoS flow and the DRB, and/or a mapping relationship between the DRB and the logical channels.

Step 2: determine, by the first network device, a logical channel priority.

In an embodiment, after the first network device determines the association between the plurality of logical channels of one or more terminals, the logical channels with the association use the same logical channel priority on the Uu interface or the sidelink interface. The specific method for determining the same logical channel priority may depend on the implementation of the first network device.

In an embodiment, after the first network device determines the association between the plurality of logical channels of one or more terminals, the logical channels with the association use the same logical channel priority on the Uu interface or the sidelink interface, which may be determined by any one of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

Step 3: send, by the first network device, a first message to the second network device through the interface between network devices.

In an embodiment, in case that the logical channels with an association correspond to a plurality of different terminals, and the different terminals are served by different network devices, step 3 is executed; otherwise, step 3 may be omitted.

For example, the first network device determines that the logical channels with an association use the same logical channel priority on the Uu interface or the sidelink interface, and the first network device sends a first message to the second network device through the interface between network device (such as the Xn interface). In an embodiment, the first message includes one or more of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity;
where the first identity includes at least one of the following: a terminal identity or a logical channel identity.

In an embodiment, the first message at least includes the logical channel priority, and may further include one or more of the following:
a common service identity (such as Common ID or Service ID);
a logical channel identity; or
a terminal identity to which the logical channel belongs.

Step 4: send, by the first network device and/or the second network device, the first configuration information to the terminal.

For example, the first network device and/or the second network device sends first configuration information to the terminal, where the first configuration information configures the same logical channel priority for the logical channels with an association.

In an embodiment, take the terminals determining the same priority as an example. FIG. 5 is a third schematic flowchart of a method for determining logical channel priority according to an embodiment of the present application. As shown in FIG. 5, the method includes the following steps.

Step 1: determine, by the terminal, the logical channels with an association.

For a terminal, a method for determining the association between different logical channels of one or more terminals includes, but is not limited to:
configuration by network devices; or
determination by the terminal.

In case that a configuration method performed by the network device is used, the second configuration information includes at least one of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

For example, the second configuration information of a network device includes, but is not limited to, one or more of the following:
a common service identity (such as Common ID or Service ID) configured for each bearer and/or logical channel; or
an identity of other bearers or logical channels having an association with the bearer or logical channel; in case that other bearer or logical channels belong to other terminals, the second configuration information also needs to carry terminal identity information and/or the identity information of the network device to which the terminal belongs.

In case that the determination method performed by the terminal is adopted, the terminal may determine the logical channels with an association based on inter-layer interaction information provided by the terminal's higher layer, a mapping relationship between the QoS flow and DRB, and/or assistance information (such as the mapping relationship between data flow QoS Flow and DRB or the logical channel) sent from other terminals through the sidelink interface.

Step 2: determine, by the terminal, that logical channels with an association use the same logical channel priority.

The "same logical channel priority" is determined by the terminal, that is, the terminal determines that a plurality of logical channels with an association belonging to one or more terminals use a same logical channel priority, which includes any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

For example, the implementation of determining the "same logical channel priority" by the terminal may be one of the following:
receiving, by the terminal, priority configuration information for logical channels from the network device, and selecting a priority of the logical channel with the highest priority among the logical channels with an association as the logical channel priority used by each logical channel in the logical channel group with an association on the Uu interface and/or the sidelink interface;
receiving, by the terminal, priority configuration information for logical channels from the network device, and selecting a priority of the logical channel with the lowest priority among the logical channels with an association as the logical channel priority used by each logical channel in the logical channel group with an association on the Uu interface and/or the sidelink interface; or
receiving, by the terminal, priority configuration information for logical channels from the network device, and weighting and averaging the logical channel priority corresponding to each logical channel, the weighted average value being used as the logical channel priority for each logical channel in the logical channel group with an association in the Uu interface and/or the sidelink interface.

Step 3: notify, by the terminal, other terminals of the logical channel priority with an association through the sidelink interface.

In an embodiment, step 3 may be performed only in case that the plurality of logical channels with an association belong to different network devices.

For example, the logical channels with an association respectively belong to a plurality of terminals. After one of the terminals determines that the logical channels with an association use the same logical channel priority, the terminal may inform the other terminals among the plurality of terminals of the same logical channel priority used by the logical channels with the association.

Step 4: use, by the terminal, the same logical channel priority;
for example, the LCP procedure is performed on logical channels with an association;
for example, the priority in the sidelink interface (SCI) is set;
for example, a UL priority or a SL priority is determined, that is, it is determined to prioritize an uplink (UL) transmission or a sidelink (SL) transmission in case of a conflict between the UL transmission and the SL transmission.

The terminal device according to the embodiments of the present application may be a device that provides voice and/or data connectivity to a user, a handheld device with a wireless connection function, or other processing devices connected to a wireless modem. In different systems, the name of the terminal device may also be different. For example, in the 5G system, the terminal device may be called user equipment (UE). A wireless terminal device may communicate with one or more core networks (CN) via a radio access network (RAN). The wireless terminal device may be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The network device of the embodiments of the present application may be a base station, which may include multiple cells providing services for terminals. Depending on the specific application scenario, the base station may also be called an access point, or may be a device in an access network that communicates with wireless terminal devices through one or more sectors on the air interface, or may be called another name. The network device may be used to convert received air frames into Internet Protocol (IP) packets and vice versa, acting as a router between the wireless terminal device and the rest of the access network, where the rest of the access network may include an Internet Protocol (IP) communication network. The network device may also coordinate the management of attributes of the air interface. For example, the network device in the embodiments of the present application may be a network device (Base Transceiver Station, BTS) in the global system for mobile communications (GSM) or code division multiple access (CDMA), or a network device (NodeB) in wide-band code division multiple access (WCDMA), or an evolved network device (eNB or e-NodeB) in the long term evolution (LTE) system, or a 5G base station (gNB) in the 5G network architecture (next generation system), or a home evolved node B (HeNB), a relay node, a femto, a pico, etc., but is not limited in the embodiments of the present application. In some network structures, a network device may include a centralized unit (CU) node and a distributed unit (DU) node. The centralized unit and the distributed unit may also be geographically separated.

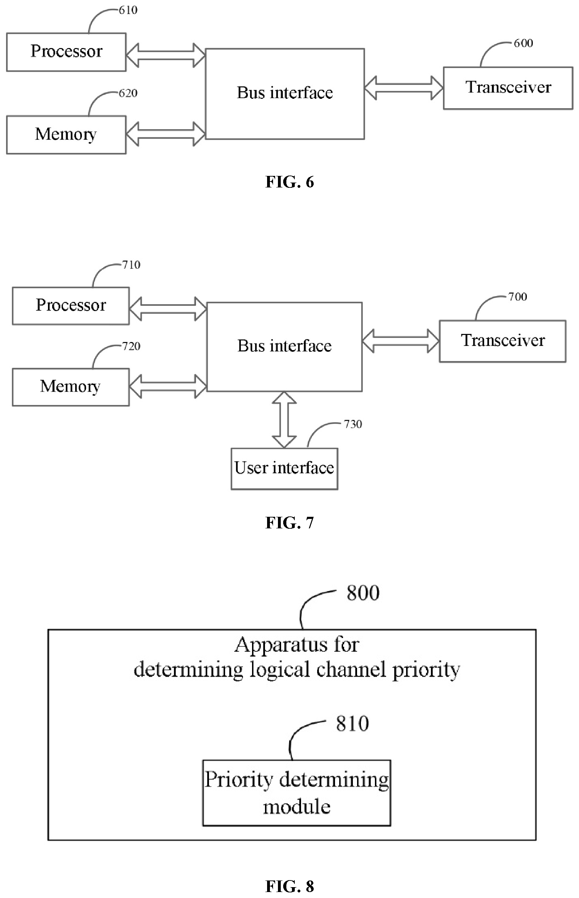

FIG. 6 is a schematic structural diagram of a first network device according to an embodiment of the present application. As shown in FIG. 6, the network device includes a memory 620, a transceiver 600, and a processor 610.

The memory 620 is used for storing a computer program; the transceiver 600 is used for receiving and sending data under control of the processor 610; and the processor 610 is used for reading the computer program in the memory 620 and performing the following operations:
determining that a plurality of logical channels with an association belonging to one or more terminals use a same logical channel priority;
where a communication equipment includes the first network device, and the first network device includes a network device that provides services to at least one of the one or more terminals; where the logical channel includes a logical channel of a Uu interface or a logical channel of a sidelink interface.

In an example, the transceiver 600 is used for receiving and sending data under control of the processor 610.

In FIG. 6, a bus architecture may include any number of interconnected buses and bridges, linking together by various circuits of one or more processors represented by processor 610 and memory represented by memory 620. The bus architecture may also link together various other circuits such as peripheral devices, voltage regulators, and power management circuits, which are all well known in the art and, therefore, will not be described further herein. The bus interface provides the interface. The transceiver 600 may be a plurality of components, including a transmitter and a receiver, providing a unit for communicating with various other devices over a transmission medium, such as a wireless channel, a wired channel, an optical cable, or the like. The processor 610 is responsible for managing the bus architecture and general processing, and the memory 620 may store data used by the processor 610 when performing operations.

The processor 610 may be a central processing unit (CPU), an application specific integrated circuit (ASIC), a field programmable gate array (FPGA), or a complex programmable logic device (CPLD). The processor may also adopt a multi-core architecture.

In an embodiment, the processor 610 is further used for:
receiving first assistance information sent from a second network device; and
determining the association among the plurality of logical channels based on the first assistance information;
where the second network device includes a network device that provides services to at least one of the one or more terminals, and the second network device is different from the first network device.

In an embodiment, the first assistance information includes one or more of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a service identity and a mapping relationship with a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

In an embodiment, the processor 610 is further used for:
sending a first message to a second network device, where the first message includes at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity;
where the first identity includes at least one of the following: a terminal identity or a logical channel identity.

In an embodiment, the processor 610 is further used for:
sending first configuration information to the one or more terminals, where the first configuration information is used for configuring a same logical channel priority for the plurality of logical channels with the association.

In an example, the processor 610 is further used for any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

In an embodiment, a same logical channel priority corresponding to the plurality of logical channels with the association at the Uu interface is used for a logical channel prioritization (LCP) procedure.

In an embodiment, a same logical channel priority corresponding to the plurality of logical channels with the association at the sideline interface is used for at least one of the following:
a logical channel prioritization (LCP) procedure;
determining a priority indicated by sidelink control information (SCI); or
determining whether to prioritize an uplink (UL) transmission or a sidelink (SL) transmission in case of a conflict between the UL transmission and the SL transmission.

Embodiments of the present application provide the first network device, in which that a plurality of logical channels with an association belonging to one or more terminals have a same logical channel priority is determined, to enable different QoS flows corresponding to a same service to be transmitted synchronously over an air interface, thereby meeting synchronous transmission requirements of a multi-modal service.

It should be noted here that the above-mentioned first network device provided in the embodiment of the present application may implement all the method steps implemented by the method embodiment in which the execution body is the first network device, and may achieve the same technical effect. The parts and beneficial effects of this embodiment that are the same as those of the method embodiment will not be described in detail here.

FIG. 7 is a schematic structural diagram of a terminal according to an embodiment of the present application. As shown in FIG. 7, the terminal includes a memory 720, a transceiver 700, and a processor 710.

The memory 720 is used for storing a computer program; the transceiver 700 is used for receiving and sending data under control of the processor 710; and the processor 710 is used for reading the computer program in the memory 720 and performing the following operations:
determining that a plurality of logical channels with an association belonging to one or more terminals use a same logical channel priority;
where a communication equipment includes at least one of the one or more terminals, and the logical channel includes a logical channel of a Uu interface or a logical channel of a sidelink interface.

In an example, the transceiver 700 is used for receiving and sending data under control of the processor 710.

In FIG. 7, a bus architecture may include any number of interconnected buses and bridges, linking together by various circuits of one or more processors represented by processor 710 and memory represented by memory 720. The bus architecture may also link together various other circuits such as peripheral devices, voltage regulators, and power management circuits, which are all well known in the art and, therefore, will not be described further herein. The bus interface provides the interface. The transceiver 700 may be a plurality of components, including a transmitter and a receiver, providing a unit for communicating with various other devices over a transmission medium, such as a wireless channel, a wired channel, an optical cable, or the like. For different user devices, the user interface 730 may also be an interface capable of connecting to external or internal devices as required, and the connected devices include but are not limited to a keypad, a display, a speaker, a microphone, a joystick, and the like.

The processor 710 is responsible for managing the bus architecture and general processing, and the memory 720 may store data used by the processor 710 when performing operations.

The processor 710 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an embodiment, the processor 710 is further used for:
determining the association among the plurality of logical channels based on second configuration information sent from a network device that provides services to the at least one terminal.

In an embodiment, the second configuration information includes at least one of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

In an embodiment, the processor 710 is further used for:
determining an initial logical channel priority corresponding to each of the plurality of logical channels based on logical channel priority configuration information sent from a network device that provides services to the terminals; and
determining that the plurality of logical channels with the association belonging to the one or more terminals use the same logical channel priority based on the initial logical channel priority corresponding to each of the plurality of logical channels.

In an example, the processor 710 is further used for any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

In an embodiment, a same logical channel priority corresponding to the plurality of logical channels with the association at the Uu interface is used for a logical channel prioritization (LCP) procedure.

In an embodiment, a same logical channel priority corresponding to the plurality of logical channels with the association at the sideline interface is used for at least one of the following:
a logical channel prioritization (LCP) procedure;
determining a priority indicated by sidelink control information (SCI); or
determining whether to prioritize an uplink (UL) transmission or a sidelink (SL) transmission in case of a conflict between the UL transmission and the SL transmission.

Embodiments of the present application provide the terminal, in which that a plurality of logical channels with an association belonging to one or more terminals have a same logical channel priority is determined, to enable different QoS flows corresponding to a same service to be transmitted synchronously over an air interface, thereby meeting synchronous transmission requirements of a multi-modal service.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

FIG. 8 is a schematic structural diagram of an apparatus for determining logical channel priority according to an embodiment of the present application. As shown in FIG. 8, the apparatus for determining logical channel priority includes:
a priority determining module 810, used for determining that multiple logical channels with an association belonging to one or more terminals use a same logical channel priority;
where the communication equipment includes a first network device, and the first network device includes a network device that provides services to at least one of the one or more terminals; or, the communication equipment includes at least one of the one or more terminals; where the logical channel includes a logical channel of a Uu interface or a logical channel of a sidelink interface.

In an embodiment, in case that the communication equipment includes the first network device, the apparatus further includes:
an assistance information receiving module, used for receiving first assistance information sent from a second network device; and
a first association determining module, used for determining the association among the plurality of logical channels based on the first assistance information;
where the second network devices include a network device that provides services to at least one of the one or more terminals, and the second network device is different from the first network device.

In an embodiment, the first assistance information includes one or more of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service (QoS) flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
where the first identity includes at least one of the following: a terminal identity or a logical channel identity.

In an embodiment, in case that the communication equipment includes the first network device, the apparatus further includes:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;;
a logical channel priority which has an association with a logical channel belonging to the second network device and corresponds to a first identity belonging to the first network device;
a logical channel priority corresponding to a service identity; or
a logical channel priority corresponding to a quality of service (QoS) flow identity;
where the first identity includes at least one of the following: a terminal identity or a logical channel identity.

In an embodiment, in case that the communication equipment includes the first network device, the apparatus further includes:
a first configuration information sending module, used for sending first configuration information to the one or more terminals, where the first configuration information is used for configuring a same logical channel priority for the plurality of logical channels with the association.

In an embodiment, in case that the communication equipment includes at least one of the one or more terminals, the method further includes:
a second association determining module, used for determining the association among the plurality of logical channels based on second configuration information sent from the network device that provides services to the at least one terminal.

In an embodiment, the second configuration information includes at least one of the following:
a service identity configured for each bearer and/or logical channel;
a quality of service (QoS) flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

In an embodiment, in case that the communication equipment includes at least one of the one or more terminals, the apparatus further includes:
determining an initial logical channel priority corresponding to each of the plurality of logical channels based on logical channel priority configuration information sent from the network device that provides services to the terminals; and
determining that the plurality of logical channels with the association belonging to the one or more terminals use the same logical channel priority based on the initial logical channel priority corresponding to each of the plurality of logical channels.

In an embodiment, the priority determining module 810 is further used for:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

In an embodiment, a same logical channel priority corresponding to the plurality of logical channels with the association at the Uu interface is used for a logical channel prioritization (LCP) procedure.

In an embodiment, a same logical channel priority corresponding to the plurality of logical channels with the association at the sideline interface is used for at least one of the following:
a logical channel prioritization (LCP) procedure;
determining a priority indicated by sidelink control information (SCI); or
determining whether to prioritize an uplink (UL) transmission or a sidelink (SL) transmission in case of a conflict between the UL transmission and the SL transmission.

Embodiments of the present application provide an apparatus for determining logical channel priority, in which that a plurality of logical channels with an association belonging to one or more terminals have a same logical channel priority is determined, to enable different QoS flows corresponding to a same service to be transmitted synchronously over an air interface, thereby meeting synchronous transmission requirements of a multi-modal service.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

According to an embodiment of the present application, a computer readable storage medium is provided, where the computer readable storage medium stores computer programs that cause a processor to perform any of the methods provided in the above-mentioned embodiments.

In an embodiment, the computer readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As well appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks of the block diagram.

These processor-executable instructions may be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A method for determining logical channel priority, performed by a communication equipment, comprising:
determining that a plurality of logical channels with an association belonging to one or more terminals use a same logical channel priority;
wherein the communication equipment comprises a first network device, and the first network device comprises a network device that provides services to at least one of the one or more terminals; or, the communication equipment comprises at least one of the one or more terminals; wherein the logical channel comprises a logical channel of a Uu interface or a logical channel of a sidelink interface.

2. The method of claim 1, wherein in case that the communication equipment comprises the first network device, the method further comprises:
receiving first assistance information sent from a second network device; and
determining the association among the plurality of logical channels based on the first assistance information;
wherein the second network device comprises a network device that provides services to at least one of the one or more terminals, and the second network device is different from the first network device.

3. The method of claim 2, wherein the first assistance information comprises at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service, QoS, flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
wherein the first identity comprises at least one of the following: a terminal identity or a logical channel identity.

4. The method of any of claims 1 to 3, wherein in case that the communication equipment comprises the first network device, the method further comprises:
sending a first message to a second network device, wherein the first message comprises at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service (QoS) flow identity;
wherein the first identity comprises at least one of the following: a terminal identity or a logical channel identity.

5. The method of any of claims 1 to 3, wherein in case that the communication equipment comprises the first network device, the method further comprises:
sending first configuration information to the one or more terminals, wherein the first configuration information is used for configuring a same logical channel priority for the plurality of logical channels with the association.

6. The method of claim 1, wherein in case that the communication equipment comprises at least one of the one or more terminals, the method further comprises:
determining the association among the plurality of logical channels based on second configuration information sent from the network device that provides services to the at least one terminal.

7. The method of claim 6, wherein the second configuration information comprises at least one of the following:
a service identity configured for each bearer and/or logical channel;
a quality of service, QoS, flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

8. The method of claim 1, wherein in case that the communication equipment comprises at least one of the one or more terminals, determining that the plurality of logical channels with the association belonging to the one or more terminals use the same logical channel priority comprises:
determining an initial logical channel priority corresponding to each of the plurality of logical channels based on logical channel priority configuration information sent from the network device that provides services to the terminals; and
determining that the plurality of logical channels with the association belonging to the one or more terminals use the same logical channel priority based on the initial logical channel priority corresponding to each of the plurality of logical channels.

9. The method of claim 1 or 8, wherein determining that the plurality of logical channels with the association belonging to the one or more terminals use the same logical channel priority comprises any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

10. The method of claim 1, wherein a same logical channel priority corresponding to the plurality of logical channels with the association at the Uu interface is used for a logical channel prioritization, LCP, procedure.

11. The method of claim 1, wherein a same logical channel priority corresponding to the plurality of logical channels with the association at the sideline interface is used for at least one of the following:
a logical channel prioritization, LCP, procedure;
determining a priority indicated by sidelink control information, SCI,; or
determining whether to prioritize an uplink, UL, transmission or a sidelink, SL, transmission in case of a conflict between the UL transmission and the SL transmission.

12. A first network device, comprising: a memory, a transceiver, and a processor:
wherein the memory is used for storing a computer program; the transceiver is used for receiving and sending data under control of the processor; and the processor is used for reading the computer program in the memory and performing the following operations:
determining that a plurality of logical channels with an association belonging to one or more terminals use a same logical channel priority;
wherein a communication equipment comprises the first network device, and the first network device comprises a network device that provides services to at least one of the one or more terminals; wherein the logical channel comprises a logical channel of a Uu interface or a logical channel of a sidelink interface.

13. The first network device of claim 12, wherein the operations further comprise:
receiving first assistance information sent from a second network device; and
determining the association among the plurality of logical channels based on the first assistance information;
wherein the second network device comprises a network device that provides services to at least one of the one or more terminals, and the second network device is different from the first network device.

14. The first network device of claim 13, wherein the first assistance information comprises at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service, QoS, flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
wherein the first identity comprises at least one of the following: a terminal identity or a logical channel identity.

15. The first network device of any of claims 12 to 14, wherein the operations further comprise:
sending a first message to a second network device, wherein the first message comprises at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service, QoS, flow identity;
wherein the first identity comprises at least one of the following: a terminal identity or a logical channel identity.

16. The first network device of any of claims 12 to 14, wherein the operations further comprise:
sending first configuration information to the one or more terminals, wherein the first configuration information is used for configuring a same logical channel priority for the plurality of logical channels with the association.

17. The first network device of claim 12, wherein determining that the plurality of logical channels with the association belonging to the one or more terminals use the same logical channel priority comprises any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

18. The first network device of claim 12, wherein a same logical channel priority corresponding to the plurality of logical channels with the association at the Uu interface is used for a logical channel prioritization, LCP, procedure.

19. The first network device of claim 12, wherein a same logical channel priority corresponding to the plurality of logical channels with the association at the sideline interface is used for at least one of the following:
a logical channel prioritization, LCP, procedure;
determining a priority indicated by sidelink control information, SCI; or
determining whether to prioritize an uplink, UL, transmission or a sidelink, SL, transmission in case of a conflict between the UL transmission and the SL transmission.

20. A terminal, comprising: a memory, a transceiver, and a processor:
wherein the memory is used for storing a computer program; the transceiver is used for receiving and sending data under control of the processor; and the processor is used for reading the computer program in the memory and performing the following operations:
determining that a plurality of logical channels with an association belonging to one or more terminals use a same logical channel priority;
wherein a communication equipment comprises at least one of the one or more terminals, and the logical channel comprises a logical channel of a Uu interface or a logical channel of a sidelink interface.

21. The terminal of claim 20, in case that the communication equipment comprises at least one of the one or more terminals, the operations further comprise:
determining the association among the plurality of logical channels based on second configuration information sent from a network device that provides services to the at least one terminal.

22. The terminal of claim 21, wherein the second configuration information comprises at least one of the following:
a service identity configured for each bearer and/or logical channel;
a quality of service, QoS, flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

23. The terminal of claim 20, wherein in case that the communication equipment comprises at least one of the one or more terminals, determining that the plurality of logical channels with the association belonging to the one or more terminals use the same logical channel priority comprises:
determining an initial logical channel priority corresponding to each of the plurality of logical channels based on logical channel priority configuration information sent from a network device that provides services to the terminals; and
determining that the plurality of logical channels with the association belonging to the one or more terminals use the same logical channel priority based on the initial logical channel priority corresponding to each of the plurality of logical channels.

24. The terminal of claim 23, wherein determining that the plurality of logical channels with the association belonging to the one or more terminals use the same logical channel priority comprises any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

25. The terminal of claim 20, wherein a same logical channel priority corresponding to the plurality of logical channels with the association at the Uu interface is used for a logical channel prioritization, LCP, procedure.

26. The terminal of claim 20, wherein a same logical channel priority corresponding to the plurality of logical channels with the association at the sideline interface is used for at least one of the following:
a logical channel prioritization, LCP, procedure;
determining a priority indicated by sidelink control information, SCI; or
determining whether to prioritize an uplink, UL, transmission or a sidelink, SL, transmission in case of a conflict between the UL transmission and the SL transmission.

27. An apparatus for determining logical channel priority, for use in a communication equipment, comprising:
a priority determining module, used for determining that a plurality of logical channels with an association belonging to one or more terminals use a same logical channel priority;
wherein the communication equipment comprises a first network device, and the first network device comprises a network device that provides services to at least one of the one or more terminals; or, the communication equipment comprises at least one of the one or more terminals; wherein the logical channel comprises a logical channel of a Uu interface or a logical channel of a sidelink interface.

28. The apparatus of claim 27, wherein in case that the communication equipment comprises the first network device, the apparatus further comprises:
an assistance information receiving module, used for receiving first assistance information sent from a second network device; and
a first association determining module, used for determining the association among the plurality of logical channels based on the first assistance information;
wherein the second network device comprises a network device that provides services to at least one of the one or more terminals, and the second network device is different from the first network device.

29. The apparatus of claim 28, wherein the first assistance information comprises at least one of the following:
a logical channel identity of a logical channel which belongs to the second network device and has an association with a logical channel belonging to the first network device;
a first identity which belongs to the second network device and has an association with a logical channel belonging to the first network device;
a logical channel identity of a logical channel which belongs to the first network device and has an association with a logical channel belonging to the second network device;
a first identity which belongs to the first network device and has an association with a logical channel belonging to the second network device;
a service identity;
a mapping relationship between a service identity and a logical channel identity of a logical channel belonging to the first network device;
a mapping relationship between a service identity and a first identity belonging to the first network device;
a mapping relationship between a service identity and a logical channel identity of a logical channel belonging to the second network device;
a mapping relationship between a service identity and a first identity belonging to the second network device;
a quality of service, QoS, flow identity;
a mapping relationship between a QoS flow identity and a logical channel identity of a logical channel belonging to the first network device;
a mapping relationship between a QoS flow identity and a first identity belonging to the first network device;
a mapping relationship between a QoS flow identity and a logical channel identity of a logical channel belonging to the second network device; or
a mapping relationship between a QoS flow identity and a first identity belonging to the second network device;
wherein the first identity comprises at least one of the following: a terminal identity or a logical channel identity.

30. The apparatus of any of claims 27 to 29, wherein in case that the communication equipment comprises the first network device, the apparatus further comprises:
a first message sending module, used for sending a first message to a second network device, wherein the first message comprises at least one of the following:
a logical channel priority which corresponds to a logical channel belonging to the second network device and has an association with a logical channel belonging to the first network device;
a logical channel priority which corresponds to a first identity belonging to the second network device and has an association with a logical channel belonging to the first network device;
a logical channel priority which corresponds to a logical channel belonging to the second network device and has an association with a logical channel belonging to the first network device;
a logical channel priority which corresponds to a first identity belonging to the first network device and has an association with a logical channel belonging to the second network device;
a logical channel priority corresponding to a service identity; or
a logical channel priority corresponding to a quality of service, QoS, flow identity.

31. The apparatus of any of claims 27 to 29, wherein in case that the communication equipment comprises the first network device, the apparatus further comprises:
a first configuration information sending module, used for sending first configuration information to the one or more terminals, wherein the first configuration information is used for configuring a same logical channel priority for the plurality of logical channels with the association.

32. The apparatus of claim 27, wherein in case that the communication equipment comprises at least one of the one or more terminals, the apparatus further comprises:
a second association determining module, used for determining the association among the plurality of logical channels based on second configuration information sent from the network device that provides services to the at least one terminal.

33. The apparatus of claim 32, wherein the second configuration information comprises at least one of the following:
a service identity configured for each bearer and/or logical channel;
a quality of service, QoS, flow identity corresponding to each bearer and/or logical channel;
an identity of a bearer or logical channel having an association with any bearer and/or logical channel among the plurality of logical channels;
a terminal identity of a terminal corresponding to a bearer or logical channel having an association with any bearer and/or logical channel among the plurality of logical channels; or
a network device identity of a network device that provides services to a terminal, the terminal corresponding to a bearer or logical channel having an association with any bearer and/or logical channel among the plurality of logical channels.

34. The apparatus of claim 27, wherein in case that the communication equipment comprises at least one of the one or more terminals, the priority determining module is used for:
determining an initial logical channel priority corresponding to each of the plurality of logical channels based on logical channel priority configuration information sent from the network device that provides services to the terminals; and
determining that the plurality of logical channels with the association belonging to the one or more terminals use the same logical channel priority based on the initial logical channel priority corresponding to each of the plurality of logical channels.

35. The apparatus of claim 27 or 34, wherein the priority determining module is used for any of the following:
taking a highest priority among initial logical channel priorities corresponding to the plurality of logical channels as the logical channel priority corresponding to the plurality of logical channels;
taking a lowest priority among initial logical channel priorities corresponding to the plurality of logical channels as the logical channel priority corresponding to the plurality of logical channels; or
taking a weighted average of initial logical channel priorities corresponding to the plurality of logical channels as the logical channel priority corresponding to the plurality of logical channels.

36. The apparatus of claim 27, wherein a same logical channel priority corresponding to the plurality of logical channels with the association at the Uu interface is used for a logical channel prioritization, LCP, procedure.

37. The apparatus of claim 27, wherein a same logical channel priority corresponding to the plurality of logical channels with the association at the sideline interface is used for at least one of the following:
a logical channel prioritization, LCP, procedure;
determining a priority indicated by sidelink control information, SCI; or
determining whether to prioritize an uplink, UL, transmission or a sidelink, SL, transmission in case of a conflict between the UL transmission and the SL transmission.

38. A processor readable storage medium, wherein the processor readable storage medium stores a computer program that cause a processor to perform the method of any of claims 1 to 11.
